# EUROPEAN PATENT APPLICATION

(11) **EP 4 782 483 A1**
(43) Date of publication of application: **29.07.2026**
(21) Application number: 24868036.5
(22) Date of filing: 26.08.2024
(51) Int. Cl.: C08J 5/00, B29B 9/12, B29C 48/08, B29C 48/09, C08J 5/18, C08L 101/16

(54) **METHOD FOR PRODUCING MOLDED ARTICLE**

(30) Priority: 22.09.2023 JP 2023157996
(71) Applicant: Kaneka Corporation, Osaka-shi, Osaka 530-8288 (JP)
(72) Inventor: FUKUSHIMA, Kengo, Osaka 566-0072 (JP); SAITO, Arihiro, Osaka 566-0072 (JP)
(74) Representative: Vossius & Partner Patentanwälte Rechtsanwälte mbB
(86) International application number: PCT/JP2024/030272
(87) International publication number: WO 2025/062956

(57) **Abstract**

A method for producing a poly(3-hydroxyalkanoate) resin-containing molded article includes the step of obtaining a molded article by introducing an intermediate composition (I) containing a poly(3-hydroxyalkanoate) resin into an extruder equipped with a die at a discharge end, melting the intermediate composition (I) in the extruder, extruding the molten intermediate composition (I) through an outlet of the die, and cooling and solidifying the extruded intermediate composition (I). The intermediate composition (I) exhibits a melting point peak (i) with a peak temperature of 165 °C or higher in differential scanning calorimetry, and a crystalline melting enthalpy calculated for the melting point peak (i) is 0.5 J/g or more.

## Description

### Technical Field

The present invention relates to a method for producing a molded article containing a poly(3-hydroxyalkanoate) resin.

### Background Art

In recent years, worldwide efforts have been initiated to reduce marine pollution and shift toward a recycle-oriented society, and active research and development has been conducted on resins of biological origin and resins having marine degradability. Poly(3-hydroxyalkanoate) resins are attracting attention as bio-based, marine-degradable resins.

Poly(3-hydroxyalkanoate) resins are thermoplastic polyesters produced and accumulated as energy storage substances in the cells of many types of microorganisms. These resins are drawing attention because they are biodegradable in seawater as well as in soil.

Investigations have been made into the production of various types of molded articles using such poly(3-hydroxyalkanoate) resins. For example, Patent Literature 1 discloses a resin tube that contains at least two poly(3-hydroxyalkanoate) resins and exhibits impact resistance.

Patent Literature 2 describes a method for producing a poly(3-hydroxybutyrate) resin-containing melt-processing composition having excellent solidification properties, the method being characterized by using a material that exhibits specific melting characteristics and performing thermal extrusion while controlling the temperature of the material within a specific range. Patent Literature 2 also describes a method for producing a molded article by melt processing the melt-processing composition. However, the properties of the molded article are not discussed in this literature.

### Citation List

### Patent Literature

PTL 1: WO 2022/009717 A1
PTL 2: WO 2021/010327 A1

### Summary of Invention

### Technical Problem

According to the invention described in Patent Literature 1, it is possible to produce a poly(3-hydroxyalkanoate) resin-containing tube that exhibits a good elastic modulus.

However, it has been found that in the production method of Patent Literature 1, increasing the tube molding speed in order to enhance productivity may significantly reduce the elastic modulus of the produced tube, or may result in a failure to obtain any molded article (see Comparative Examples 1 to 3 described later).

In view of the above circumstances, the present invention aims to produce a poly(3-hydroxyalkanoate) resin-containing molded article that exhibits a good elastic modulus with good productivity.

### Solution to Problem

As a result of intensive studies aimed at solving the above problem, the present inventors have found that a molded article that exhibits a good elastic modulus can be produced with good productivity by first preparing an intermediate composition containing a poly(3-hydroxyalkanoate) resin and having specific melting characteristics and then melt processing the intermediate composition. Based on this finding, the inventors have completed the present invention.

Specifically, the present invention relates to a molded article production method for producing a poly(3-hydroxyalkanoate) resin-containing molded article, the method including a second step of obtaining a molded article by introducing an intermediate composition (I) containing a poly(3-hydroxyalkanoate) resin into an extruder equipped with a die at a discharge end, melting the intermediate composition (I) in the extruder, extruding the molten intermediate composition (I) through an outlet of the die, and cooling and solidifying the extruded intermediate composition (I), wherein
the intermediate composition (I) exhibits a melting point peak (i) with a peak temperature of 165 °C or higher in differential scanning calorimetry, and
a crystalline melting enthalpy calculated for the melting point peak (i) is 0.5 J/g or more.

### Advantageous Effects of Invention

The present invention makes it possible to produce a poly(3-hydroxyalkanoate) resin-containing molded article that exhibits a good elastic modulus with good productivity.

### Description of Embodiments

Hereinafter, embodiments of the present invention will be described. The present invention is not limited to the embodiments described below.

The present invention relates to a molded article production method including the step of obtaining a molded article by introducing an intermediate composition (I) containing a poly(3-hydroxyalkanoate) resin into an extruder equipped with a die at a discharge end, melting the intermediate composition (I) in the extruder, extruding the molten intermediate composition (I) through an outlet of the die, and cooling and solidifying the extruded intermediate composition (I). The intermediate composition (I) can be obtained by melting a raw material composition containing the poly(3-hydroxyalkanoate) resin and cooling and solidifying the molten raw material composition.

### [Poly(3-Hydroxyalkanoate) Resins]

Poly(3-hydroxyalkanoate) resins will be described first.

The term "poly(3-hydroxyalkanoate) resin" (hereinafter sometimes abbreviated as "P3HA") refers to any polymer containing at least a 3-hydroxyalkanoic acid as a monomer unit. Examples of 3-hydroxyalkanoic acids constituting P3HAs include, but are not limited to, 3-hydroxybutyric acid, 3-hydroxypropionic acid, 3-hydroxypentanoic acid, 3-hydroxyhexanoic acid, 3-hydroxyheptanoic acid, and 3-hydroxyoctanoic acid. The P3HA used may be a homopolymer or a copolymer containing two or more types of monomer units.

The P3HA may be a copolymer whose monomer units include at least one of the above 3-hydroxyalkanoic acids and another hydroxyalkanoic acid (e.g., a 4-hydroxyalkanoic acid such as 4-hydroxybutyric acid).

One P3HA may be used alone, or two or more P3HAs may be used in combination. It is preferable to use a combination of two or more P3HAs.

The P3HA-containing raw material composition or intermediate composition (I), or the molded article produced according to the present disclosure, preferably contains 50 wt% or more, more preferably 70 wt% or more, even more preferably 80 wt% or more, still more preferably 90 wt% or more, of a P3HA. The use of a P3HA as a main component allows for good biodegradability.

### [Poly(3-Hydroxyalkanoate) Copolymer (A)]

The P3HA-containing raw material composition or intermediate composition (I) preferably contains at least a poly(3-hydroxyalkanoate) copolymer (A) as a P3HA. The term "poly(3-hydroxyalkanoate) copolymer" refers to a copolymer having at least one type or two or more types of 3-hydroxyalkanoate units.

Preferably, the 3-hydroxyalkanoate units are represented by the following formula (1).

[-CHR-CH₂-CO-O-] (1)

In the formula (1), R is an alkyl group represented by CₚH₂ₚ₊₁, and p is an integer from 1 to 15. Examples of R include linear or branched alkyl groups such as methyl, ethyl, propyl, methylpropyl, butyl, isobutyl, t-butyl, pentyl, and hexyl groups. The integer p is preferably from 1 to 10 and more preferably from 1 to 8.

The poly(3-hydroxyalkanoate) copolymer (A) is particularly preferably a microbially produced poly(3-hydroxyalkanoate) resin. In microbially produced poly(3-hydroxyalkanoate) copolymers, all 3-hydroxyalkanoate units are contained as (R)-3-hydroxyalkanoate units.

The poly(3-hydroxyalkanoate) copolymer (A) preferably contains 50 mol% or more, more preferably 60 mol% or more, even more preferably 70 mol% or more, of 3-hydroxyalkanoate units (in particular, the units represented by the formula (1)) in the total structural units (monomer units). The poly(3-hydroxyalkanoate) copolymer (A) may contain only two or more types of 3-hydroxyalkanoate units as polymer structural units, or may contain other units (such as 4-hydroxyalkanoate units) in addition to one type or two or more types of 3-hydroxyalkanoate units.

The poly(3-hydroxyalkanoate) copolymer (A) is preferably a copolymer containing 3-hydroxybutyrate (hereinafter also referred to as 3HB) units and other hydroxyalkanoate units. All of the 3-hydroxybutyrate units are preferably (R)-3-hydroxybutyrate units.

The other hydroxyalkanoate units may be 3-hydroxyalkanoate units other than 3HB units or may be hydroxyalkanoate units other than 3-hydroxyalkanoate units (such as 4-hydroxyalkanoate units). The other hydroxyalkanoate units may consist solely of one type of hydroxyalkanoate units or may include two or more types of hydroxyalkanoate units.

Specific examples of the poly(3-hydroxyalkanoate) copolymer (A) include poly(3-hydroxybutyrate-co-3-hydroxypropionate), poly(3-hydroxybutyrate-co-3-hydroxyvalerate) abbreviated as P3HB3HV, poly(3-hydroxybutyrate-co-3-hydroxyvalerate-co-3-hydroxyhexanoate), poly(3-hydroxybutyrate-co-3-hydroxyhexanoate) abbreviated as P3HB3HH, poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), and poly(3-hydroxybutyrate-co-4-hydroxybutyrate) abbreviated as P3HB4HB. In particular, in terms of molded article productivity and the mechanical properties of the molded article, poly(3-hydroxybutyrate-co-3-hydroxyhexanoate) or poly(3-hydroxybutyrate-co-4-hydroxybutyrate) is preferred. Particularly preferred is poly(3-hydroxybutyrate-co-3-hydroxyhexanoate).

In terms of molded article productivity and the mechanical properties of the molded article, it is preferable that the poly(3-hydroxyalkanoate) copolymer (A) include at least two poly(3-hydroxyalkanoate) copolymers differing in crystallinity. More preferably, the copolymer (A) includes at least two poly(3-hydroxyalkanoate) copolymers differing in the types and/or proportions of the constituent monomers.

Specifically, the poly(3-hydroxyalkanoate) copolymer (A) preferably includes: a copolymer (A1) that contains 3-hydroxybutyrate units and other hydroxyalkanoate units and in which the proportion of the other hydroxyalkanoate units is from 1 to 5 mol%; and a copolymer (A2) that contains 3-hydroxybutyrate units and other hydroxyalkanoate units and in which the proportion of the other hydroxyalkanoate units is 24 mol% or more. This resin makeup enables the molded article to exhibit a good elastic modulus, and facilitates formation of the intermediate composition (I) having a melting point peak (i) described later, thereby enhancing molded article productivity.

Preferably, the copolymer (A) further includes, in addition to the copolymers (A1) and (A2), a copolymer (A3) that contains 3-hydroxybutyrate units and other hydroxyalkanoate units and in which the proportion of the other hydroxyalkanoate units is from 6 to less than 24 mol%. In this case, a better elastic modulus and better productivity can be achieved.

The copolymer (A1) is a high-crystallinity poly(3-hydroxyalkanoate) resin, whereas the copolymer (A2) is a low-crystallinity poly(3-hydroxyalkanoate) resin. The copolymer (A3) is a mid-crystallinity poly(3-hydroxyalkanoate) resin whose crystallinity is intermediate between those of the copolymers (A1) and (A2).

Generally, high-crystallinity poly(3-hydroxyalkanoate) resins are superior in terms of productivity but have poor mechanical properties, while low-crystallinity poly(3-hydroxyalkanoate) resins have excellent mechanical properties although being inferior in terms of productivity. The use of a combination of the two or three resins described above makes it possible to obtain a molded article while ensuring a good balance between productivity and mechanical properties.

The proportion of the other hydroxyalkanoate units in the copolymer (A1) is from 1 to 5 mol%. In terms of molded article productivity, the proportion is preferably at least 2 mol%. The proportion is preferably up to 4 mol%.

The copolymer (A1) is preferably poly(3-hydroxybutyrate-co-3-hydroxyhexanoate) or poly(3-hydroxybutyrate-co-4-hydroxybutyrate), and more preferably poly(3-hydroxybutyrate-co-3-hydroxyhexanoate).

The proportion of the other hydroxyalkanoate units in the copolymer (A2) is 24 mol% or more. In terms of the strength of the molded article, the proportion is preferably at least 26 mol% and more preferably at least 28 mol%. In terms of productivity in producing the copolymer (A2), the proportion is preferably up to 99 mol%, more preferably up to 50 mol%, even more preferably up to 40 mol%, and particularly preferably up to 30 mol%.

The copolymer (A2) is preferably poly(3-hydroxybutyrate-co-3-hydroxyhexanoate) or poly(3-hydroxybutyrate-co-4-hydroxybutyrate), and more preferably poly(3-hydroxybutyrate-co-3-hydroxyhexanoate).

The proportions in which the copolymers (A1) and (A2) are used are not limited to particular ranges. In terms of productivity in producing the copolymer (A2) and the balance between molded article productivity and the mechanical strength of the molded article, the weight ratio of the copolymer (A1) to the copolymer (A2) is preferably from 1.5 to 4.5. The weight ratio is preferably at least 2.0. The weight ratio is preferably up to 4.0 and more preferably up to 3.5.

The proportion of the other hydroxyalkanoate units in the copolymer (A3) is from 6 to less than 24 mol%. In terms of productivity in producing the copolymer (A3) and molded article productivity, the proportion is preferably up to 20 mol% and more preferably up to 15 mol%. The proportion is preferably at least 8 mol% and more preferably at least 10 mol%.

The copolymer (A3) is preferably poly(3-hydroxybutyrate-co-3-hydroxyhexanoate) or poly(3-hydroxybutyrate-co-4-hydroxybutyrate), and more preferably poly(3-hydroxybutyrate-co-3-hydroxyhexanoate).

The proportion of the copolymer (A3) to the total amount of the copolymers (A1), (A2), and (A3) is preferably from 5 to 45 wt% in terms of the balance between copolymer productivity or molded article productivity and the mechanical properties of the copolymers or molded article. Controlling the proportion of the copolymer (A3) to 5 wt% or more can lead to good productivity. Controlling the proportion of the copolymer (A3) to 45 wt% or less enables the molded article to exhibit a good elastic modulus. The proportion is preferably at least 10 wt%. The proportion is preferably up to 40 wt%, more preferably up to 30 wt%, and even more preferably up to 25 wt%.

### [Poly(3-Hydroxybutyrate) (B)]

The P3HA-containing raw material composition or intermediate composition (I) preferably contains a poly(3-hydroxybutyrate) (B) as a P3HA in addition to the poly(3-hydroxyalkanoate) copolymer (A). In this case, the solidification speed in the second step can be further increased, and molded article productivity can be further enhanced.

The term "poly(3-hydroxybutyrate) (B)" generally refers to a homopolymer of 3-hydroxybutyrate, but a small amount of monomer units other than 3-hydroxybutyrate units may be contained in the poly(3-hydroxybutyrate) (B). Specifically, it is preferable that the proportion of 3-hydroxybutyrate units in the total constituent monomers of the poly(3-hydroxybutyrate) (B) be more than 99 mol% and up to 100 mol%. The incorporation of the poly(3-hydroxybutyrate) (B) can increase the solidification speed of the total poly(3-hydroxyalkanoate) resin, thereby improving molded article productivity.

The monomer units other than 3-hydroxybutyrate units that may be contained in the poly(3-hydroxybutyrate) (B) are not limited to a particular type, and may be any monomer units copolymerizable with 3-hydroxybutyrate units. Examples include 3-hydroxyalkanoate units other than 3-hydroxybutyrate units and hydroxyalkanoate units other than 3-hydroxyalkanoate units (such as 4-hydroxyalkanoate units). Specific examples include the units mentioned above for the poly(3-hydroxyalkanoate) copolymer.

The amount of the poly(3-hydroxybutyrate) (B) may be set as appropriate. Preferably, the amount of the poly(3-hydroxybutyrate) (B) is from 5 to 15 wt% based on 100 wt% of the total amount of the poly(3-hydroxyalkanoate) copolymer (A) and the poly(3-hydroxybutyrate) (B). When the amount is 5 wt% or more, the solidification speed of the total poly(3-hydroxyalkanoate) resin can be increased and productivity can be improved, so that a molded article can be produced at a high speed. The amount is more preferably at least 8 wt% and even more preferably at least 10 wt%. When the amount is 15 wt% or less, gel formation in the molded article is more likely to be prevented. The amount is more preferably up to 13 wt%.

The average ratio between 3-hydroxybutyrate units and other hydroxyalkanoate units (3-hydroxybutyrate units/other hydroxyalkanoate units) in the total monomer units constituting the total poly(3-hydroxyalkanoate) resin contained in the raw material composition or the intermediate composition (I) is preferably from 93/7 to 80/20 (mol%/mol%), more preferably from 92/8 to 81/18 (mol%/mol%), and even more preferably from 90/10 to 82/16 (mol%/mol%) in order to ensure good molded article strength and good molded article productivity.

The average ratio between different monomer units in the total monomer units constituting the total poly(3-hydroxyalkanoate) resin can be determined by a method known to those skilled in the art, such as the method described in paragraph [0047] of WO 2013/147139 A1. The "average ratio" refers to the molar ratio between different monomer units in the total monomer units constituting the total poly(3-hydroxyalkanoate) resin.

The weight-average molecular weight of the poly(3-hydroxyalkanoate) resin is not limited to a particular range. In order to ensure good molded article strength and good molded article productivity, the weight-average molecular weight is preferably from 20 × 10⁴ to 200 × 10⁴, more preferably from 25 × 10⁴ to 150 × 10⁴, and even more preferably from 30 × 10⁴ to 100 × 10⁴.

The weight-average molecular weight of each of the copolymer (A1), the copolymer (A2), the copolymer (A3), and the poly(3-hydroxybutyrate) (B) is not limited to a particular range. However, in order to ensure good molded article strength and good molded article productivity, the weight-average molecular weight of the copolymer (A1) or the poly(3-hydroxybutyrate) (B) is preferably from 20 × 10⁴ to 100 × 10⁴, more preferably from 22 × 10⁴ to 80 × 10⁴, and even more preferably from 25 × 10⁴ to 70 × 10⁴. In order to ensure good molded article strength and good molded article productivity, the weight-average molecular weight of the copolymer (A2) or (A3) is preferably from 20 × 10⁴ to 250 × 10⁴, more preferably from 25 × 10⁴ to 230 × 10⁴, and even more preferably from 30 × 10⁴ to 200 × 10⁴.

The weight-average molecular weight of the poly(3-hydroxyalkanoate) resin, the copolymer (A1), (A2), or (A3), or the poly(3-hydroxybutyrate) (B) can be measured as a polystyrene-equivalent molecular weight by gel permeation chromatography (HPLC GPC system manufactured by Shimadzu Corporation) using a chloroform solution of the resin. The columns used in the gel permeation chromatography may be any columns suitable for weight-average molecular weight measurement.

The method for producing the poly(3-hydroxyalkanoate) resin is not limited to a particular technique, and may be a production method using chemical synthesis or a microbial production method. A microbial production method is preferred. The microbial production method used can be any known method. Known examples of bacteria that produce copolymers of 3-hydroxybutyrate with other hydroxyalkanoates include *Aeromonas caviae* which is a P3HB3HV- and P3HB3HH-producing bacterium and *Alcaligenes eutrophus* which is a P3HB4HB-producing bacterium. In particular, in order to increase P3HB3HH productivity, *Alcaligenes eutrophus* AC32 (FERM BP-6038; see T. Fukui, Y. Doi, J. Bacteriol., 179, pp. 4821-4830 (1997)) incorporating a P3HA synthase gene is more preferred. Such a microorganism is cultured under suitable conditions to allow the microorganism to accumulate P3HB3HH in its cells, and the microbial cells accumulating P3HB3HH are used. Instead of the above microorganisms, a genetically modified microorganism incorporating any suitable poly(3-hydroxyalkanoate) resin synthesis-related gene may be used depending on the poly(3-hydroxyalkanoate) resin to be produced. The culture conditions including the type of the substrate may be optimized depending on the poly(3-hydroxyalkanoate) resin to be produced.

The method for obtaining a blend of two or more poly(3-hydroxyalkanoate) resins is not limited to a particular technique. A blend of two or more poly(3-hydroxyalkanoate) resins may be obtained by microbial production or chemical synthesis. Alternatively, a blend of two or more resins may be obtained by melting and kneading the resins using a device such as an extruder, a kneader, a Banbury mixer, or a roll mill, or may be obtained by dissolving and mixing the resins in a solvent and drying the resulting mixture.

### (Additional Resin)

The raw material composition or the intermediate composition (I) may contain an additional resin other than poly(3-hydroxyalkanoate) resins to the extent that the additional resin does not diminish the effect of the invention. Examples of such additional resins include aliphatic polyester resins such as polybutylene succinate adipate, polybutylene succinate, polycaprolactone, and polylactic acid; and aliphatic-aromatic polyester resins such as polybutylene adipate terephthalate, polybutylene sebacate terephthalate, and polybutylene azelate terephthalate. The composition may contain only one additional resin or two or more additional resins.

The amount of the additional resin is not limited to a particular range, but is preferably 30 parts by weight or less, more preferably 20 parts by weight or less, even more preferably 10 parts by weight or less, and particularly preferably 5 parts by weight or less per 100 parts by weight of the total amount of the poly(3-hydroxyalkanoate) resin. The amount of the additional resin may be 1 part by weight or less. The lower limit of the amount of the additional resin is not limited to a particular value and may be 0 part by weight.

### (Plasticizer)

The raw material composition or the intermediate composition (I) preferably contains a plasticizer in addition to the poly(3-hydroxyalkanoate) resin. The incorporation of a plasticizer can improve molded article productivity.

The plasticizer is not limited to a particular compound. In terms of compatibility with the poly(3-hydroxyalkanoate) resin, the use of an ester compound having an ester bond in the molecule is preferred.

Examples of ester compounds that can be used as plasticizers include modified glycerin compounds, dibasic ester compounds, adipic ester compounds, polyether ester compounds, benzoic ester compounds, citric ester compounds, isosorbide ester compounds, and polycaprolactone compounds. Among these, modified glycerin ester compounds, dibasic ester compounds, adipic ester compounds, polyether ester compounds, and isosorbide ester compounds are preferred. One of the ester compounds mentioned above may be used alone, or two or more thereof may be used in combination. When two or more ester compounds are used in combination, the mixing proportions of the ester compounds can be adjusted as appropriate.

Preferred examples of modified glycerin compounds include glycerin ester compounds. Glycerin ester compounds that can be used include monoesters, diesters, and triesters of glycerin. In terms of compatibility with the poly(3-hydroxyalkanoate) resin, triesters of glycerin are preferred. Among triesters of glycerin, glycerin diacetomonoesters are particularly preferred. Specific examples of glycerin diacetomonoesters include glycerin diacetomonolaurate, glycerin diacetomonooleate, glycerin diacetomonostearate, glycerin diacetomonocaprylate, and glycerin diacetomonodecanoate. Examples of such modified glycerin compounds include "RIKEMAL" PL series and "BIOCIZER" of Riken Vitamin Co., Ltd.

Specific examples of dibasic ester compounds include dibutyl adipate, diisobutyl adipate, bis(2-ethylhexyl) adipate, diisononyl adipate, diisodecyl adipate, bis[2-(2-butoxyethoxy)ethyl] adipate, bis[2-(2-butoxyethoxy)ethyl] adipate, bis(2-ethylhexyl) azelate, dibutyl sebacate, bis(2-ethylhexyl) sebacate, diethyl succinate, and mixed dibasic ester compounds.

Examples of adipic ester compounds include diethylhexyl adipate, dioctyl adipate, and diisononyl adipate.

Examples of polyether ester compounds include polyethylene glycol dibenzoate, polyethylene glycol dicaprylate, and polyethylene glycol diisostearate.

Among the ester compounds mentioned above, modified glycerin compounds are preferred in terms of cost, high utility, and high biomass level. In particular, in view of contact with foods, glycerin triesters are more preferred, glycerin diacetomonoesters are even more preferred, and glycerin diacetomonolaurate is particularly preferred.

The amount of the plasticizer to be incorporated can be set as appropriate in view of the moldability and strength of the molded article. Preferably, the amount of the plasticizer is from 0.1 to 10 parts by weight per 100 parts by weight of the total amount of the poly(3-hydroxyalkanoate) resin. The amount of the plasticizer is preferably at least 1 part by weight, more preferably at least 2 parts by weight, and even more preferably at least 3 parts by weight. The amount of the plasticizer is preferably up to 8 parts by weight and more preferably up to 6 parts by weight.

### (Additives)

The raw material composition or the intermediate composition (I) may contain additives to the extent that the additives do not diminish the effect of the invention. Examples of additives include nucleating agents, lubricants, plasticizers, antistatic agents, flame retardants, conductive additives, heat insulators, crosslinking agents, antioxidants, ultraviolet absorbers, colorants, inorganic fillers, organic fillers, and hydrolysis inhibitors, and these additives may be used depending on the intended purpose. Biodegradable additives are particularly preferred.

Examples of nucleating agents include: sugar alcohols such as pentaerythritol, galactitol, and mannitol; orotic acid; aspartame; cyanuric acid; glycine; zinc phenylphosphonate; and boron nitride. Among these, sugar alcohols are preferred because they are particularly effective in accelerating the crystallization of the poly(3-hydroxyalkanoate) resin, and pentaerythritol is particularly preferred.

The amount of the nucleating agent to be used is not limited to a particular range, but is preferably from 0.1 to 5 parts by weight, more preferably from 0.5 to 3 parts by weight, and even more preferably from 0.7 to 1.5 parts by weight per 100 parts by weight of the total amount of the poly(3-hydroxyalkanoate) resin. One nucleating agent may be used alone or two or more nucleating agents may be used. The proportions of the nucleating agents used can be adjusted as appropriate depending on the intended purpose.

However, the raw material composition, the intermediate composition (I), or the resulting molded article may be substantially free of any sugar alcohols such as pentaerythritol. The expression "substantially free of any sugar alcohols" means that the amount of sugar alcohols is less than 0.1 parts by weight per 100 parts by weight of the total amount of the poly(3-hydroxyalkanoate) resin. The amount of sugar alcohols may be less than 0.01 parts by weight. In an aspect in which the composition or the molded article is substantially free of any sugar alcohols, bleed-out of a sugar alcohol from the molded article, and concomitant soiling of production equipment, can be avoided.

When the composition or the molded article is substantially free of any sugar alcohols, the composition or the molded article preferably contains talc and/or a fatty acid amide as a nucleating agent, and particularly preferably contains both talc and a fatty acid amide. The use of these nucleating agents in combination with the poly(3-hydroxybutyrate) (B) can result in good molded article productivity even when the composition or the molded article is substantially free of any sugar alcohols.

Specific examples of fatty acid amides are described in detail below as lubricants. A fatty acid amide can function both as a nucleating agent and as a lubricant.

Examples of lubricants include behenamide, oleamide, erucamide, stearamide, palmitamide, N-stearyl behenamide, N-stearyl erucamide, ethylene bis(stearamide), ethylene bis(oleamide), ethylene bis(erucamide), ethylene bis(lauramide), ethylene bis(capramide), p-phenylene bis(stearamide), and a polycondensation product of ethylenediamine, stearic acid, and sebacic acid. Among these, behenamide and erucamide are preferred because they are particularly effective in lubricating the poly(3-hydroxyalkanoate) resin.

The amount of the lubricant to be used is not limited to a particular range, but is preferably from 0.01 to 5 parts by weight, more preferably from 0.05 to 3 parts by weight, and even more preferably from 0.1 to 1.5 parts by weight per 100 parts by weight of the total amount of the poly(3-hydroxyalkanoate) resin. One lubricant may be used, or two or more lubricants may be used. The proportions of the lubricants used can be adjusted as appropriate depending on the intended purpose.

The poly(3-hydroxyalkanoate) resin-containing raw material composition may be obtained by blending its components. Alternatively, the composition may be obtained by mixing the components and then homogenizing the mixture by thermal melting. The raw material composition used in the first step is not limited to a particular form, and may be in the form of pellets or a powder.

### [Step of Obtaining Intermediate Composition (I): First Step]

In the step of obtaining the poly(3-hydroxyalkanoate) resin-containing intermediate composition (I) (also referred to as the "first step"), the poly(3-hydroxyalkanoate) resin-containing raw material composition is thermally melted, and the molten composition is then cooled and solidified to prepare the intermediate composition (I). The thermal melting of the raw material composition can be accomplished using a common processing machine. The processing machine is not limited to a particular type, and may be any known machine. Examples include a Banbury mixer, a roll mill, a kneader, and a single-screw or multi-screw extruder. The use of an extruder is particularly preferred.

In the present embodiment, during the thermal melting of the raw material composition, the maximum temperature experienced by the material is controlled. As a result, the intermediate composition (I) produced in this step can be tailored to exhibit specific melting characteristics. In differential scanning calorimetry, the intermediate composition (I) exhibits at least a melting point peak (i) with a peak temperature of 165 °C or higher. The presence of this peak indicates that a high-melting-point P3HA resin component is contained in the intermediate composition (I). Such a high-melting-point P3HA resin component does not readily melt during melt processing in the subsequent second step.

The intermediate composition (I) exhibits the melting point peak (i) at a high temperature of 165 °C or higher. Accordingly, during melt processing of the intermediate composition (I) in the subsequent second step, the high-melting-point P3HA resin component can remain unmelted while the intermediate composition (I) as a whole melts to a degree sufficient for melt processing. Such a resin component remaining unmelted in the molten resin acts as a nucleating agent during cooling and solidification, thereby facilitating crystallization and solidification of the molten resin. As a result, solidification efficiency during melt processing in the second step is improved, so that productivity can be enhanced.

The peak temperature of the melting point peak (i) is 165 °C or higher. In order to further improve molded article productivity and the elastic modulus of the molded article, the peak temperature is preferably 166 °C or higher, more preferably 167 °C or higher, and even more preferably 168 °C or higher. The upper limit of the peak temperature of the melting point peak (i) is not limited to a particular value. In terms of ease of production, the peak temperature is preferably up to 180 °C, more preferably up to 175 °C, and even more preferably up to 172 °C.

Furthermore, in differential scanning calorimetry, the intermediate composition (I) exhibits a crystalline melting enthalpy, calculated for the melting point peak (i), of 0.5 J/g or more. This means that the high-melting-point P3HA resin component that can act as a nucleating agent in the second step is contained in an adequate amount in the intermediate composition (I). Accordingly, not only is solidification efficiency during melt processing in the second step improved and productivity enhanced, but also the elastic modulus of the resulting molded article can be improved. If the crystalline melting enthalpy is less than 0.5 J/g, it becomes difficult to produce a molded article that exhibits a sufficient elastic modulus.

For the intermediate composition (I), the crystalline melting enthalpy calculated for the melting point peak (i) is preferably high. Specifically, the crystalline melting enthalpy is preferably 1 J/g or more, more preferably 2 J/g or more, and even more preferably 3 J/g or more. The upper limit of the crystalline melting enthalpy is not limited to a particular value. In order to facilitate melting of the intermediate composition (I) as a whole, the crystalline melting enthalpy is preferably up to 20 J/g, more preferably up to 10 J/g, and even more preferably up to 8 J/g.

Preferably, in differential scanning calorimetry, the intermediate composition (I) further exhibits a melting point peak (ii) with a peak temperature of 140 to below 165 °C, in addition to the melting point peak (i). The presence of the melting point peak (ii) indicates that a P3HA resin component having a melting point lower than the peak temperature of the melting point peak (i) is contained in the intermediate composition (I). The low-melting-point P3HA resin component melts relatively readily. This makes it easier to melt the intermediate composition (I) to a degree sufficient for melt processing in the second step.

The peak temperature of the melting point peak (ii) is from 140 to below 165 °C. In terms of ease of production, this peak temperature is preferably from 145 to below 160 °C and more preferably from 150 to below 158 °C.

The difference between the peak temperature of the melting point peak (i) and the peak temperature of the melting point peak (ii) is not limited to a particular range. In order for the P3HA resin component exhibiting the melting point peak (i) to remain unmelted while the intermediate composition (I) as a whole melts to a degree sufficient for melt processing, the difference is preferably 5 °C or more, more preferably 10 °C or more, and even more preferably 12 °C or more. The upper limit of the temperature difference is not limited to a particular value. In terms of ease of production, the temperature difference is preferably up to 60 °C, more preferably up to 40 °C, and even more preferably up to 25 °C.

Differential scanning calorimetry of the intermediate composition (I) can be performed by the method described in detail in Examples below. The crystalline melting enthalpy calculated for the melting point peak (i) can also be determined as described in detail in Examples.

To obtain the intermediate composition (I) that exhibits the melting characteristics described above, the maximum temperature reached by the raw material composition during thermal melting in the first step is preferably in the range of 140 to 170 °C. The maximum temperature is preferably at least 145 °C, more preferably at least 150 °C, and even more preferably at least 155 °C. The maximum temperature is preferably up to 165 °C and more preferably up to 160 °C.

Furthermore, to obtain the intermediate composition (I) that exhibits the melting characteristics described above, it is more preferable that the maximum temperature reached by the raw material composition during thermal melting in the first step be equal to or higher than the peak temperature of a melting point peak measured for the raw material composition by differential scanning calorimetry before thermal melting, and be equal to or lower than the end temperature of the melting point peak. In this case, some crystals of the poly(3-hydroxyalkanoate) resin can remain unmelted even during thermal melting in the first step. This makes it easy to newly form the melting point peak (i) in a temperature range above the temperature range in which the melting point peak of the raw material composition appears.

The above-described maximum temperature of the raw material composition does not refer to a set temperature of a processing machine such as an extruder, but refers to the maximum temperature that the material being thermally melted actually exhibits, including a temperature increase caused by shear heat. The maximum temperature during thermal melting can be measured, for example, for the material discharged through a die of an extruder. The maximum temperature during thermal melting varies depending on parameters such as the set temperature of the extruder (the set temperature of a cylinder or a die), the screw configuration of the extruder, and the rotational speed of the extruder. Thus, the maximum temperature can be controlled by adjusting these parameters as appropriate.

In order to control the maximum temperature during thermal melting in the first step such that the maximum temperature is equal to or higher than the peak temperature of a melting point peak measured for the raw material composition before thermal melting and is equal to or lower than the end temperature of the melting point peak, it is preferable that in differential scanning calorimetry performed on the total poly(3-hydroxyalkanoate) resin contained in the raw material composition, the resin exhibit a broad melting point peak. Specifically, the difference between the peak temperature of the melting point peak and the end temperature of the melting point peak is preferably 10 °C or more. A poly(3-hydroxyalkanoate) resin that exhibits such a broad melting point peak can be formed, as described above, by using two or more poly(3-hydroxyalkanoate) resins having different monomer compositions.

In order to form the melting point peak (i) of the intermediate composition (I) and increase the crystalline melting enthalpy of the melting point peak (i), it is also desirable to control the production speed of the intermediate composition (I). If the production speed of the intermediate composition (I) is too high, the melting point peak (i) may not be formed, or the crystalline melting enthalpy of the melting point peak (i) may fail to reach a sufficient value.

After the raw material composition is thermally melted as described above, the molten composition is cooled and solidified by an ordinary method. In this manner, the intermediate composition (I) can be obtained. The intermediate composition (I) is not limited to a particular form, and may be in the form of pellets or a powder.

### [Second Step: Step of Obtaining Molded Article]

In the step of obtaining a molded article (also referred to as the "second step"), the molded article is produced by introducing the intermediate composition (I) described above into an extruder equipped with a die at its discharge end, thermally melting the intermediate composition (I) in the extruder, extruding the molten intermediate composition (I) through the outlet of the die, and cooling and solidifying the extruded intermediate composition (I). The intermediate composition (I) may be produced by the molded article manufacturer or may be acquired from another entity.

In this step, preferably, the intermediate composition (I) is first fully dried at a temperature of about 40 to 80 °C, as needed, to remove moisture. Next, if necessary, the composition is blended with optional components such as additional resins and additives as described above, and the resulting blend is processed using a known molding method. In this manner, a molded article of any desired form can be produced.

Examples of molding methods include extrusion molding, blow molding, fiber spinning, extrusion foaming, and bead foaming.

In the second step, the maximum temperature reached by the intermediate composition (I) during thermal melting is preferably 160 °C or higher and more preferably 165 °C or higher. The thermal melting performed under such temperature conditions allows for sufficient melting of the intermediate composition (I) as a whole which contains a resin component that exhibits the melting point peak (i), thereby enabling the production of a molded article having high uniformity and good physical properties. The upper limit of the maximum temperature is not not limited to a particular value. In order to avoid resin decomposition, the maximum temperature is preferably up to 180 °C and more preferably up to 175 °C.

In addition, the maximum temperature reached by the intermediate composition (I) during thermal melting in the second step is more preferably higher than the maximum temperature reached by the raw material composition during thermal melting in the first step. In this case, the melting point peak (i) can be newly formed in the first step, while in the second step, the intermediate composition (I) as a whole, which contains a resin component that exhibits the melting point peak (i), can be melted to a sufficient degree.

By the molded article production method according to the present disclosure, a molded article that exhibits a good elastic modulus can be produced with good productivity, i.e., at a high molding speed. Specifically, for example, when the molded article is a tube, a molding speed of 60 m/min or higher can be achieved in the second step. The molding speed can be increased to 90 m/min or higher, 120 m/min or higher, or 150 m/min or higher.

Given that the molded article production method according to the present disclosure offers good productivity, the residence time of the intermediate composition (I) in the extruder during the second step is preferably 6 minutes or less, for example, when the molded article is a tube. Such a short residence time in the extruder can minimize thermal deterioration of the resin.

In one aspect of the present embodiment, the molded article may be a tube. The tube can be molded by the second step in which the composition is extruded through an annular die coupled to the discharge end of an extruder and introduced into water for solidification.

The term "tube" refers to a hollow, slender, cylindrical molded article having a wall that has a generally constant thickness and that is generally circular in cross-section. The tube can be used as, but is not limited to, a straw or a pipe.

In differential scanning calorimetry of the tube according to the present disclosure, the tube preferably exhibits a crystalline melting enthalpy, calculated over a temperature range above the maximum temperature experienced by the intermediate composition (I) in the second step, of 1.0 J/g or more. In this case, the tube can easily be designed to exhibit a good elastic modulus. The enthalpy is more preferably 1.5 J/g or more, even more preferably 2.0 J/g or more, and particularly preferably 3.0 J/g or more. The upper limit of the enthalpy is not limited to a particular value. In terms of ease of production, the enthalpy is preferably up to 10 J/g, more preferably up to 8 J/g, and even more preferably up to 5 J/g. The crystalline melting enthalpy can be calculated by the method described in detail in Examples below.

The tube according to the present disclosure exhibits a good elastic modulus. Specifically, the tensile modulus of the tube is preferably 1500 MPa or more, more preferably 1600 MPa or more, and even more preferably 1700 MPa or more. The upper limit of the tensile modulus is not limited to a particular value. The tensile modulus may be up to 3000 MPa, up to 2500 MPa, or up to 2000 MPa. The term "tensile modulus" as used herein refers to that measured by the procedures described in detail in Examples below.

In the case where the tube according to the present disclosure is used as a straw, the wall thickness of the tube is preferably from 0.01 to 0.6 mm, more preferably from 0.05 to 0.5 mm, and even more preferably from 0.1 to 0.4 mm so that: the straw can avoid collapsing when a beverage is sucked through the straw; the straw can be flexible enough to resist breakage; the straw can cause little injury when its end contacts a body part such as a fingertip; and the straw can be quickly biodegraded in seawater.

In the case where the tube according to the present disclosure is used as a straw, the outer diameter of the tube is not limited to a particular range. In terms of ease of use of the straw for drinking a beverage, the outer diameter is preferably from 2 to 10 mm, more preferably from 4 to 8 mm, and even more preferably from 5 to 7 mm.

In the case where the tube according to the present disclosure is used as a pipe, the wall thickness of the tube can be set as appropriate by those skilled in the art. The wall thickness is preferably from 0.7 to 10 mm and more preferably from 1 to 8 mm. The pipe can be suitably used for purposes such as the cultivation or capture of seafood products.

The length of the tube according to the present disclosure is not limited to a particular range. In the case where the tube is used as a straw, the length of the tube is preferably from 50 to 350 mm, more preferably from 70 to 300 mm, and even more preferably from 90 to 270 mm in terms of ease of use of the straw for drinking a beverage.

The tube used as a straw may be a tube that has not been subjected to any secondary process or a tube that has undergone a secondary process such as the formation of a stopper portion or a corrugated portion.

In the case where the tube according to the present disclosure is subjected to a secondary process, the secondary process may be carried out at room temperature or under heating. The tube according to the present disclosure is suitable for being subjected to a secondary process involving heating. The heating temperature in the secondary process can be set as appropriate and may, for example, be from about 100 to about 150 °C.

According to one aspect of the present embodiment, the molded article may be a film. Examples of film molding methods include T-die extrusion molding and blown film molding.

In the following items, preferred aspects of the present disclosure are listed. The present invention is not limited to the following items.

### [Item 1]

A molded article production method for producing a poly(3-hydroxyalkanoate) resin-containing molded article, the method including the step of obtaining a molded article by introducing an intermediate composition (I) containing a poly(3-hydroxyalkanoate) resin into an extruder equipped with a die at a discharge end, melting the intermediate composition (I) in the extruder, extruding the molten intermediate composition (I) through an outlet of the die, and cooling and solidifying the extruded intermediate composition (I), wherein
the intermediate composition (I) exhibits a melting point peak (i) with a peak temperature of 165 °C or higher in differential scanning calorimetry, and
a crystalline melting enthalpy calculated for the melting point peak (i) is 0.5 J/g or more.

### [Item 2]

The molded article production method according to item 1, wherein the intermediate composition (I) further exhibits a melting point peak (ii) with a peak temperature of 140 to below 165 °C in differential scanning calorimetry.

### [Item 3]

The molded article production method according to item 2, wherein a difference between the peak temperature of the melting point peak (i) and the peak temperature of the melting point peak (ii) is 5 °C or more.

### [Item 4]

The molded article production method according to any one of items 1 to 3, wherein a maximum temperature of the intermediate composition (I) in the step of obtaining the molded article is from 160 to 175 °C.

### [Item 5]

The molded article production method according to any one of items 1 to 4, further including the step of obtaining the intermediate composition (I) by melting a raw material composition containing the poly(3-hydroxyalkanoate) resin and cooling and solidifying the molten raw material composition.

### [Item 6]

The molded article production method according to any one of items 1 to 5, wherein a maximum temperature of the raw material composition in the step of obtaining the intermediate composition (I) is from 140 to 170 °C and is lower than a maximum temperature of the intermediate composition (I) in the step of obtaining the molded article.

### [Item 7]

The molded article production method according to any one of items 1 to 6, wherein the molded article is a tube.

### [Item 8]

The molded article production method according to item 7, wherein in the step of obtaining the molded article, a residence time of the intermediate composition (I) in the extruder is 6 minutes or less.

### [Item 9]

The molded article production method according to item 7 or 8, wherein a molding speed in the step of obtaining the molded article is 60 m/min or higher.

### [Item 10]

The molded article production method according to any one of items 7 to 9, wherein the tube exhibits a crystalline melting enthalpy of 1.0 J/g or more in differential scanning calorimetry, the crystalline melting enthalpy being calculated over a temperature range above a maximum temperature of the intermediate composition (I) in the step of obtaining the molded article.

### [Item 11]

The molded article production method according to any one of items 7 to 10, wherein the tube exhibits a tensile modulus of 1500 MPa or more.

### [Item 12]

The molded article production method according to any one of items 1 to 6, wherein the molded article is a film.

### [Item 13]

The molded article production method according to any one of items 1 to 12, wherein the poly(3-hydroxyalkanoate) resin contains a poly(3-hydroxyalkanoate) copolymer (A).

### [Item 14]

The molded article production method according to item 13, wherein the poly(3-hydroxyalkanoate) resin further contains a poly(3-hydroxybutyrate) (B).

### [Item 15]

The molded article production method according to item 13 or 14, wherein the poly(3-hydroxyalkanoate) copolymer (A) includes:
a copolymer (A1) that contains 3-hydroxybutyrate units and other hydroxyalkanoate units and in which a proportion of the other hydroxyalkanoate units is from 1 to 5 mol%; and
a copolymer (A2) that contains 3-hydroxybutyrate units and other hydroxyalkanoate units and in which a proportion of the other hydroxyalkanoate units is 24 mol% or more.

### [Item 16]

The molded article production method according to item 15, wherein the poly(3-hydroxyalkanoate) copolymer (A) further includes a copolymer (A3) that contains 3-hydroxybutyrate units and other hydroxyalkanoate units and in which a proportion of the other hydroxyalkanoate units is from 6 to less than 24 mol%.

### Examples

Hereinafter, the present invention will be specifically described using examples. The technical scope of the present invention is not limited by the examples given below.

The materials used in Examples and Comparative Examples are listed below.

### [Poly(3-Hydroxyalkanoate) Resins]

PHB: Poly(3-hydroxybutyrate) (weight-average molecular weight = 30 × 10⁴ g/mol)
This resin was produced according to the method described in Comparative Example 1 of WO 2004/041936 A1.

P3HB3HH-3: P3HB3HH (average 3HB/3HH ratio = 97.1/2.9 (mol%/mol%), weight-average molecular weight = 30 × 10⁴ g/mol)
This resin was produced according to the method described in WO 2019/142845 A1.

P3HB3HH-3H: P3HB3HH (average 3HB/3HH ratio = 97.2/2.8 (mol%/mol%), weight-average molecular weight = 66 × 10⁴ g/mol)
This resin was produced according to the method described in Example 1 of WO 2019/142845 A1.

P3HB3HH-6: P3HB3HH (average 3HB/3HH ratio = 94/6 (mol%/mol%), weight-average molecular weight = 78 × 10⁴ g/mol)
This resin was produced according to the method described in WO 2008/010296 A1.

P3HB3HH-11: P3HB3HH (Kaneka Biodegradable Polymer PHBH^{™}, average 3HB/3HH ratio = 89/11 (mol%/mol%), weight-average molecular weight = 30 × 10⁴ g/mol)
This resin was produced according to the method described in WO 2008/010296 A1.

P3HB3HH-13: P3HB3HH (Kaneka Biodegradable Polymer PHBH^{™}, average 3HB/3HH ratio = 87.1/12.9 (mol%/mol%), weight-average molecular weight = 33 × 10⁴ g/mol)
P3HB3HH-30: P3HB3HH (average 3HB/3HH ratio = 70.5/29.5 (mol%/mol%), weight-average molecular weight = 64 × 10⁴ g/mol)
This resin was produced according to the method described in Example 9 of WO 2019/142845 A1.

### [Additives]

Additive-1: Behenamide (BNT-22H, manufactured by Nippon Fine Chemical Co., Ltd.)
Additive-2: Erucamide (NEUTRON-S, manufactured by Nippon Fine Chemical Co., Ltd.)

### [Plasticizer]

Plasticizer: Glycerin diacetomonolaurate (BIOCIZER, manufactured by Riken Vitamin Co., Ltd.)

### [Inorganic Filler]

Inorganic filler: Talc [SG-200N15, manufactured by Nippon Talc Co., Ltd.]

Evaluation procedures carried out in Examples and Comparative Examples will be described below.

### [Measurement of Melting Point Peak Temperature and Crystalline Melting Enthalpy in Differential Scanning Calorimetry]

The melting point peak temperatures and crystalline melting enthalpies of the intermediate compositions (I) (pellets) and the molded articles (tubes) were measured as follows.

### (Intermediate Composition (I) (Pellets))

About 2 mg of the polyhydroxyalkanoate resin-containing intermediate composition (I) obtained as pellets in each of Examples or Comparative Examples was weighed into a differential scanning calorimeter (DSC 25, manufactured by TA Instruments), in which the composition (I) was heated from -30 °C to 180 °C at a temperature increase rate of 10 °C/min. On the resulting DSC curve, the temperature of the melting point peak was determined. Furthermore, on the DSC curve, the baseline observed before the onset of the melting point peak and the baseline observed after the end of the melting point peak (when there were two or more melting point peaks, the baseline observed before the onset of the lowest-temperature melting point peak and the baseline observed after the end of the highest-temperature melting point peak) were connected by a straight line a, and the area of the melting region bounded by the straight line a and the DSC curve was calculated as the amount of heat (when there were two or more melting point peaks, a straight line b perpendicular to the abscissa (temperature axis) was drawn from a local maximum point present between the highest-temperature melting point peak (i) and the next lower-temperature melting point peak, and the area of the region bounded by the two straight lines a and b and the DSC curve was calculated as the amount of heat). This amount of heat was determined as the crystalline melting enthalpy (J/g) calculated for the melting point peak (i) of the intermediate composition (I) (pellets).

### (Molded Article (Tube))

About 2 mg of the molded article (tube) obtained in each of Examples or Comparative Examples was weighed into a differential scanning calorimeter (DSC 25, manufactured by TA Instruments), in which the molded article was heated from -30 °C to 180 °C at a temperature increase rate of 10 °C/min. On the resulting DSC curve, the temperature of the melting point peak detected in the highest temperature range was determined. In addition, on the DSC curve, the baseline observed before the onset of the melting point peak and the baseline observed after the end of the melting point peak (when there were two or more melting point peaks, the baseline observed before the onset of the lowest-temperature melting point peak and the baseline observed after the end of the highest-temperature melting point peak) were connected by a straight line c. A straight line d perpendicular to the abscissa (temperature axis) was further drawn at the maximum temperature reached by the intermediate composition (I) in the second step, and the area of the melting region bounded by the two straight lines c and d and the DSC curve was calculated as the amount of heat, which was determined as the crystalline melting enthalpy (J/g) of the molded article (tube).

### [Tensile Testing of Tube: Evaluation of Tensile Modulus]

Each of the molded articles prepared was cut to obtain a film-shaped molded article, which was cut into the shape of a No. 7 dumbbell specimen as specified in JIS K 6251. The cut film was subjected to tensile testing using a tensile tester (EZ-LX 1kN, manufactured by Shimadzu Corporation) according to JIS K 7127 at a tensile speed of 100 mm/min. The tensile modulus was calculated based on the S-S curve obtained by the tensile testing.

### (Example 1)

### [Preparation of Intermediate Composition (I)]

A blend of 12.0 parts by weight of PHB, 52.2 parts by weight of P3HB3HH-3, 22.8 parts by weight of P3HB3HH-30, and 13.0 parts by weight of P3HB3HH-13 was prepared, and this blend was further blended with 1.0 parts by weight of Additive-1, 0.5 parts by weight of Additive-2, and 4.3 parts by weight of the plasticizer.

The resulting resin material (resin mixture) was introduced into a 26-mm-diameter corotating twin-screw extruder whose cylinder temperature and die temperature were both set to 151 °C (the molding temperature for the intermediate composition (I)), and the resin material was extruded in such a manner that the strand of the extruded resin material was drawn at a speed (the molding speed for the intermediate composition (I)) of 5 kg/hour. The strand of the extruded resin material was passed through a water bath filled with hot water at 40 °C to solidify the strand. The solidified strand was cut using a pelletizer to obtain an intermediate composition (I) in the form of pellets. The obtained intermediate composition (I) was subjected to differential scanning calorimetry to measure the melting point peak temperature and the crystalline melting enthalpy. The results are shown in Table 1. The maximum temperature of the resin material during the production of the intermediate composition (I) was 156.7 °C, which was the temperature measured at the die outlet.

### [Preparation of Tube]

An annular die (outer diameter = 15 mm, inner diameter = 13.5 mm) was coupled to a 50-mm-diameter single screw extruder, whose cylinder temperature and die temperature were both set to 150 °C. The intermediate composition (I) was introduced into the extruder and extruded into the shape of a tube through the annular die. The extruded tube was passed through a 40 °C water bath located at a distance of 100 mm from the annular die, and was drawn at a speed of 90 m/min by a haul-off machine. As a result, a tube having an outer diameter of 6 mm, a wall thickness of 0.2 mm, and a length of 200 mm was successfully obtained. The maximum temperature of the intermediate composition (I) during tube molding was 169.1 °C, which was the temperature measured at the die outlet.

The tensile modulus of the obtained tube and its crystalline melting enthalpy in differential scanning calorimetry were measured. The results are summarized in Table 1.

### (Examples 2 to 7 and Comparative Examples 1 to 5)

Intermediate compositions (I) in the form of pellets and tubes were prepared in the same manner as in Example 1, except that the molding temperature and molding speed for the intermediate compositions (I) and the molding speed for the tubes were changed as shown in Table 1. The intermediate compositions (I) and the tubes were subjected to the same evaluations as in Example 1. The results are summarized in Table 1.

**[Table 1]**

| | Intermediate composition (I) | | | | | | Tube | | | | |
|---|---|---|---|---|---|---|---|---|---|---|---|
| | Molding temperature | Maximum temperature during molding | Molding speed | Melting point peak temperature | | Crystalline melting enthalpy of melting point peak (i) | Maximum temperature during molding | Molding speed | Residence time in extruder | Tensile modulus | Crystalline melting enthalpy calculated over temperature range above maximum temperature during molding |
| | (°C) | (°C) | (kg/h) | (°C) | | (J/g) | (°C) | (m/min) | (min) | (MPa) | (J/g) |
| | | | | (i) | (ii) | | | | | | |
| Ex. 1 | 151 | 156.7 | 5 | 169.9 | 153.8 | 3.97 | 169.1 | 90 | 3.2 | 1865 | 3.80 |
| Ex. 2 | 151 | 156.7 | 5 | 169.9 | 153.8 | 3.97 | 168.9 | 120 | 2.7 | 1689 | 4.00 |
| Ex. 3 | 151 | 156.7 | 5 | 169.9 | 153.8 | 3.97 | 168.5 | 150 | 2.0 | 1784 | 3.57 |
| Ex. 4 | 151 | 156.7 | 5 | 169.9 | 153.8 | 3.97 | 168.1 | 180 | 1.4 | 1729 | 4.00 |
| Ex. 5 | 149 | 157.1 | 10 | 168.3 | 154.9 | 4.25 | 168.5 | 150 | 2.0 | 1807 | 3.17 |
| Ex. 6 | 148 | 154.6 | 5 | 166.0 | 149.9 | 5.95 | 168.5 | 150 | 2.0 | 1511 | 2.14 |
| Ex. 7 | 151 | 157.8 | 7 | 169.8 | 156.4 | 1.43 | 168.5 | 150 | 2.0 | 1542 | 1.83 |
| Comp. 1 | 150 | 174.7 | 20 | - | 159.0 | 0 | 169.1 | 90 | 3.2 | 1338 | 0.29 |
| Comp. 2 | 150 | 174.7 | 20 | - | 159.0 | 0 | 168.9 | 120 | 2.7 | 1265 | 0.37 |
| Comp. 3 | 150 | 174.7 | 20 | - | 159.0 | 0 | 168.5 | 150 | 2.0 | Molding failed | - |
| Comp. 4 | 155 | 160.1 | 10 | 170.7 | 158.3 | 0.25 | 168.5 | 150 | 2.0 | 1430 | 0.69 |
| Comp. 5 | 147 | 152.8 | 5 | 164.7 | 147.0 | 12.55 | 168.5 | 150 | 2.0 | 1474 | 0.98 |

Table 1 reveals the following findings. In Examples 1 to 7, resin tubes exhibiting a tensile modulus of 1500 MPa or more, which is sufficient for practical use, were successfully molded at a high speed of 90 to 180 m/min.

In Comparative Examples 1 to 3 and 5, the intermediate compositions (I) did not exhibit the melting point peak (i) with a peak temperature of 165 °C or higher, and in Comparative Example 4, the crystalline melting enthalpy calculated for the melting point peak (i) of the intermediate composition (I) was low. In these comparative examples, the tube solidification speed was so slow that the tensile modulus of the resulting tube was low or any tube was not formed.

### [T-Die Film Moldability]

T-die film moldability was rated according to the following criteria based on the maximum T-die film haul-off speed (the maximum haul-off speed at which the film does not stick to the cooling roll) during T-die film production.
Good: The maximum haul-off speed is 10 m/min or higher.
Poor: The maximum haul-off speed is lower than 10 m/min.

### [Tensile Testing of T-Die Film: Evaluation of Tensile Modulus]

A 60-µm-thick film obtained at a molding speed of 5.0 m/min was tested according to JIS K 7113. Specifically, the film was punched to give five dumbbell specimens (Type 2 (1/3) as specified in JIS K 7113) in the MD direction and/or the TD direction, and tensile testing was performed five times using a tensile tester ("EZ Test EZ-LX" manufactured by Shimadzu Corporation) at a tensile speed of 100 mm/min. The tensile modulus was calculated based on the S-S curve obtained in each test, and the average of the five measurement values was calculated. Such average values are shown in Table 2.

### (Example 8)

### (Production of Intermediate Composition (I))

A blend of 13 parts by weight of PHB, 30 parts by weight of PHBH-30, 30 parts by weight of PHBH-3H, 20 parts by weight of PHBH-6, and 7 parts by weight of PHBH-11 was prepared, and this blend was further dry-blended with 1 part by weight of talc as an inorganic filler and 1 part by weight of Additive-1.

The resulting resin material (resin mixture) was introduced into a 26-mm-diameter corotating twin-screw extruder whose cylinder temperature and die temperature were both set to 154 °C (the molding temperature for the intermediate composition (I)), and the resin material was extruded in such a manner that the strand of the extruded resin material was drawn at a speed (the molding speed for the intermediate composition (I)) of 5 kg/hour. The strand of the extruded resin material was passed through a water bath filled with hot water at 40 °C to solidify the strand. The solidified strand was cut using a pelletizer to obtain an intermediate composition (I) in the form of pellets. The obtained intermediate composition (I) was subjected to differential scanning calorimetry to measure the melting point peak temperature and the crystalline melting enthalpy. The results are shown in Table 2.

### (Production of T-Die Film)

A T-die having a width of 350 mm was coupled to a 40-mm-diameter single-screw extruder, whose cylinder temperature and die temperature were both set to 164 °C.

The intermediate composition (I) was introduced into the single-screw extruder and extruded into the shape of a film through the T-die. The molded film was cooled on a cooling roll (diameter = 250 mm) with a set temperature of 60 °C and was then wound onto a take-up roll. In this manner, a T-die film was produced. The maximum temperature of the intermediate composition (I) during T-die film molding was 166.1 °C, which was the temperature measured at the outlet of the T-die.

T-die film moldability was evaluated during the T-die film production, and the result is shown in Table 2.

### (Comparative Example 6)

An intermediate composition (I) in the form of pellets and a T-die film were prepared as in Example 8, except that the molding temperature and molding speed for the intermediate composition (I) were changed as shown in Table 1. The intermediate composition (I) and the T-die film were subjected to the same evaluations as in Example 8. The results are summarized in Table 2.

**[Table 2]**

| | Intermediate composition (I) | | | | | | Film | | | |
|---|---|---|---|---|---|---|---|---|---|---|
| | Molding temperature | Maximum temperature during molding | Molding speed | Melting point peak temperature | | Crystalline melting enthalpy of melting point peak (i) | Maximum temperature during molding | Moldability (maximum haul-off speed) | | Tensile modulus [MD/TD] |
| | (°C) | (°C) | (kg/h) I | (°C) | | (J/g) | (°C) | (m/min) | Rating | (MPa) |
| | | | | (i) | (ii) | | | | | |
| Ex. 8 | 154 | 164.4 | 5 | 172 | 159 | 6.7 | 166.1 | 13.0 | Good | 1210/1195 |
| Comp. 6 | 160 | 174.7 | 15 | - | 161 | 0 | 166.5 | 3.5 | Poor | 1115/1008 |

Table 2 reveals the following findings. In Example 8, a T-die film having a high alastic modulus was successfully molded at a high speed of 10m/min or higher.

In contrast, in Comparative Example 6, where the intermediate composition (I) did not exhibit the melting point peak (i) with a peak temperature of 165 °C or higher, the film readily stuck to the cooling roll, and the molding speed for the T-die film failed to reach 10 m/min or higher. Furthermore, the resulting T-die film exhibited a lower elastic modulus than the film of Example 8.

## Claims

1. A molded article production method for producing a poly(3-hydroxyalkanoate) resin-containing molded article, the method comprising the step of obtaining a molded article by introducing an intermediate composition (I) containing a poly(3-hydroxyalkanoate) resin into an extruder equipped with a die at a discharge end, melting the intermediate composition (I) in the extruder, extruding the molten intermediate composition (I) through an outlet of the die, and cooling and solidifying the extruded intermediate composition (I), wherein
the intermediate composition (I) exhibits a melting point peak (i) with a peak temperature of 165 °C or higher in differential scanning calorimetry, and
a crystalline melting enthalpy calculated for the melting point peak (i) is 0.5 J/g or more.

2. The molded article production method according to claim 1, wherein the intermediate composition (I) further exhibits a melting point peak (ii) with a peak temperature of 140 to below 165 °C in differential scanning calorimetry.

3. The molded article production method according to claim 2, wherein a difference between the peak temperature of the melting point peak (i) and the peak temperature of the melting point peak (ii) is 5 °C or more.

4. The molded article production method according to claim 1 or 2, wherein a maximum temperature of the intermediate composition (I) in the step of obtaining the molded article is from 160 to 175 °C.

5. The molded article production method according to claim 1 or 2, further comprising the step of obtaining the intermediate composition (I) by melting a raw material composition containing the poly(3-hydroxyalkanoate) resin and cooling and solidifying the molten raw material composition.

6. The molded article production method according to claim 1 or 2, wherein a maximum temperature of the raw material composition in the step of obtaining the intermediate composition (I) is from 140 to 170 °C and is lower than a maximum temperature of the intermediate composition (I) in the step of obtaining the molded article.

7. The molded article production method according to claim 1 or 2, wherein the molded article is a tube.

8. The molded article production method according to claim 7, wherein in the step of obtaining the molded article, a residence time of the intermediate composition (I) in the extruder is 6 minutes or less.

9. The molded article production method according to claim 7, wherein a molding speed in the step of obtaining the molded article is 60 m/min or higher.

10. The molded article production method according to claim 7, wherein the tube exhibits a crystalline melting enthalpy of 1.0 J/g or more in differential scanning calorimetry, the crystalline melting enthalpy being calculated over a temperature range above a maximum temperature of the intermediate composition (I) in the step of obtaining the molded article.

11. The molded article production method according to claim 7, wherein the tube exhibits a tensile modulus of 1500 MPa or more.

12. The molded article production method according to claim 1 or 2, wherein the molded article is a film.

13. The molded article production method according to claim 1, wherein the poly(3-hydroxyalkanoate) resin comprises a poly(3-hydroxyalkanoate) copolymer (A).

14. The molded article production method according to claim 13, wherein the poly(3-hydroxyalkanoate) resin further comprises a poly(3-hydroxybutyrate) (B).

15. The molded article production method according to claim 13 or 14, wherein the poly(3-hydroxyalkanoate) copolymer (A) comprises:
a copolymer (A1) that contains 3-hydroxybutyrate units and other hydroxyalkanoate units and in which a proportion of the other hydroxyalkanoate units is from 1 to 5 mol%; and
a copolymer (A2) that contains 3-hydroxybutyrate units and other hydroxyalkanoate units and in which a proportion of the other hydroxyalkanoate units is 24 mol% or more.

16. The molded article production method according to claim 15, wherein the poly(3-hydroxyalkanoate) copolymer (A) further comprises a copolymer (A3) that contains 3-hydroxybutyrate units and other hydroxyalkanoate units and in which a proportion of the other hydroxyalkanoate units is from 6 to less than 24 mol%.
